# EUROPEAN PATENT SPECIFICATION

(11) **EP 1 481 189 B1**
(45) Date of publication and mention of the grant of the patent: **12.04.2006**
(21) Application number: 03708292.2
(22) Date of filing: 03.03.2003
(51) Int. Cl.: F16L 53/00, E03B 7/14

(54) **ARRANGEMENT FOR KEEPING A PIPE UNFROZEN, A METHOD AND AN APPARATUS FOR MANUFACTURING SAID ARRANGEMENT**
ANORDNUNG ZUM VERHINDERN DES GEFRIERENS EINES ROHRS, VERFAHREN UND VORRICHTUNG ZUR HERSTELLUNG DER ANORDNUNG
AGENCEMENT PERMETTANT D'EMPECHER UN TUYAU DE GELER, ET PROCEDE ET APPAREIL PERMETTANT DE FABRIQUER LEDIT AGENCEMENT

(30) Priority: 04.03.2002 FI 20020415
(43) Date of publication of application: 01.12.2004
(73) Proprietor: Uponor Innovation AB, 513 81 Fristad (SE)
(72) Inventor: RANTALAINEN, Janne, FIN-15540 Villähde (FI)
(74) Representative: Huhtanen, Ossi Jaakko
(86) International application number: PCT/FI2003/000154
(87) International publication number: WO 2003/074926

(56) References cited:
- EP-A1- 0 483 681
- EP-A1- 0 967 430
- DE-A1- 10 051 111
- DE-A1- 19 728 942
- US-A- 4 334 142

## Description

### FIELD OF THE INVENTION

The invention relates to an arrangement for keeping a pipe unfrozen which comprises an insulation layer provided with a heat-conductive strip.

The invention also relates to a method of manufacturing an arrangement for keeping a pipe unfrozen, the method comprising guiding insulation and a heat-conductive strip into each other.

The invention further relates to an apparatus for manufacturing an arrangement for keeping a pipe unfrozen, the apparatus including means for feeding insulation and means for feeding a heat-conductive strip inside the insulation.

### BACKGROUND OF THE INVENTION

It is conventional to arrange a layer of thermal insulation around a pipe to be kept unfrozen, such as a water pipe. External insulation of the pipe does not, however, always sufficiently guarantee that the pipe remains unfrozen. Solutions for defreezing a pipe or for keeping it unfrozen also exist where a thermal cable is mounted inside the insulation layer. The cable heats the pipe, thus keeping it unfrozen or defreezing it. However, it is rather difficult to implement installation thermal cables inside insulation material as a retrofit, for example. In particular, it is difficult to achieve watertight solutions. Solutions (see DE 100 51 111 A and DE 197 28 942 A, for example) also exist where a thermal cable is mounted on the pipe surface and an aluminium strip is arranged on top of the cable to enhance heat transfer from the cable to the pipe. An insulation layer is arranged outside these and an outer sheath outside the insulation layer. The price of such a solution is, however, rather high, especially if the pipe is relatively long. It is rather difficult to implement solution of this kind as a retrofit because a pipe trench is required. Furthermore, if one does not want to provide the whole length of the pipe with the arrangement for keeping the pipe unfrozen, a pipe connection has to be provided between the non-insulated pipe and the insulated pipe to be added.

### BRIEF DESCRIPTION OF THE INVENTION

The object of the invention is to provide an improved arrangement for keeping a pipe unfrozen and a method and an apparatus for the manufacture thereof.

The arrangement for keeping a pipe unfrozen according to the invention is characterized in that the heat-conductive strip is attached to the inner surface of the insulation layer in such a way that there is an assembly space between the heat-conductive strip and the insulation layer.

The method of the invention is characterized by attaching the edges of the heat-conductive strip to the inner surface of the insulation in such a way that an assembly space is formed between the heat-conductive strip and the insulation.

The apparatus of the invention is characterized in that the apparatus includes means for attaching the edges of the heat-conductive strip to the inner surface of insulation in such a way that an assembly space is formed between the heat-conductive strip and the insulation.

The basic idea of the invention is that the arrangement for keeping a pipe unfrozen includes an insulation layer which is provided with a heat-conductive strip. The heat-conductive strip is attached inside the insulation layer in such a way that an assembly space is formed between the heat-conductive strip and the insulation layer for a thermal cable, for example. More preferably, the heat-conductive strip is attached inside the insulation layer by heat. There is preferably also an outer sheath outside the insulation layer, and the arrangement for keeping a pipe unfrozen includes end covers so that a watertight solution can be achieved.

An advantage of the invention is that the arrangement for keeping a pipe unfrozen is easy to install so that it is mounted around the pipe to be kept unfrozen only at necessary points. Retrofitting of the arrangement for keeping a pipe unfrozen according to the invention is also simple and easy. It is very easy to make the arrangement for keeping a pipe unfrozen equipped with an outer layer and an end cover completely watertight.

In this specification, the term 'arrangement for keeping a pipe unfrozen' refers to a solution where one tries to keep a pipe unfrozen, i.e. tries to prevent the pipe from freezing and/or tries to defrost a frozen pipe.

### BRIEF DESCRIPTION OF DRAWINGS

The invention will be described in greater detail in the accompanying drawings, in which
Figure 1 is a schematic cross sectional view of an arrangement for keeping a pipe unfrozen seen from one end;
Figure 2 schematically illustrates an apparatus for manufacturing the arrangement for keeping a pipe unfrozen, and
Figure 3 schematically illustrates the arrangement for keeping a pipe unfrozen installed in a water pipe which enters a building.

### DETAILED DESCRIPTION OF THE INVENTION

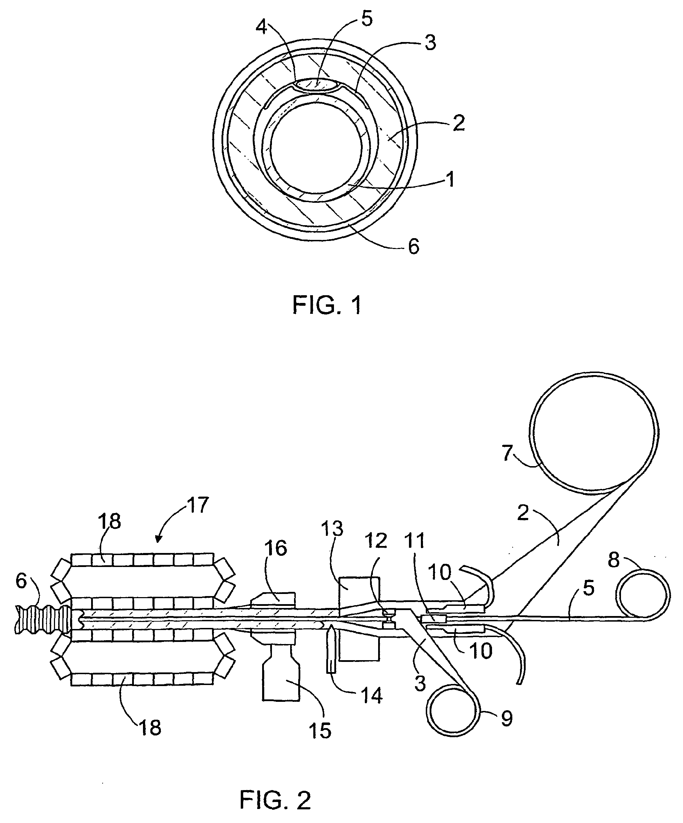

Figure 1 shows an arrangement for keeping a pipe unfrozen. In the middle of Figure 1, there is the pipe 1 to be kept unfrozen. The pipe 1 may be, for example, a water pipe or a pressure sewage pipe or a pipe for some other purpose where flowing fluid should be kept unfrozen. The material of the pipe 1 may be polyethylene PE or cross-linked polyethylene PEX, for instance. The pipe 1 can also be manufactured from some other plastic material or from metal or another suitable material.

Outside the pipe 1, there is insulation 2 around the pipe 1, and the insulation thus forms an insulation layer. The insulation 2 is most preferably cross-linked closed-cell polyethylene foam. The insulation 2 may also consist of one or more layers. Further, the insulation may be made of some other material, such as foamed polypropylene or polyurethane.

A heat-conductive strip 3 is attached inside the insulation layer in such a way that there is an assembly space 4 between the heat-conductive strip 3 and the insulation layer 2. In the assembly space 4, there is a thermal cable 5. The thermal cable 5 heats the pipe 1 and the fluid flowing therein. The heat-conductive strip 3 enhances heat transfer from the thermal cable 5 to the pipe 1. The thermal cable 5 is in contact with the heat-conductive strip 3, and thanks to its good thermal conductivity, the heat-conductive strip 3 enhances the influence of the heat of the thermal cable 5 on keeping the pipe 1 unfrozen. The heat-conductive strip may be made of aluminium foil or aluminium foil coated with polyethylene PE, for example. The thickness of the aluminium foil is approximately 0.1 mm and its width approximately 60 mm, for instance. The heat-conductive strip may also be made of suitable heat-conductive material other than aluminium.

Outside the insulation 2, there is an outer sheath 6. The outer sheath 6 is most preferably made of polyethylene PE. Furthermore, the outer sheath 6 is most preferably corrugated, in which case the ring stiffness of the arrangement is rather good, for example 8-12 KN/m². However, thanks to corrugation and softness of the insulation 2, the arrangement is bendable. Thus the arrangement can be wound on a reel e.g. for storage and transportation and reeled out in connection with installation. The diameter of the pipe 1 may vary between 25 and 110 mm, in which case the outer diameter of the outer sheath 6 may vary between 60 and 200 mm, for instance. The thickness of the insulation layer may vary between 10 and 40 mm, for example.

Figure 2 illustrates an apparatus for manufacturing an arrangement for keeping a pipe unfrozen. The insulation 2 is a prefabricated, board-shaped insulation which is wound on a reel 7. For the sake of clarity, Figure 2 does not illustrate means for supporting and rotating the reel 7. Correspondingly, the thermal cable 5 is on reel 8 and the heat-conductive strip 3 on reel 9. The means for supporting and rotating the reels 8 and 9 are not shown in Figure 2 for the sake of clarity. The thermal cable 5 is guided against the inner surface of the insulating board, i.e. against the surface which forms the inner surface of the insulation layer when the insulation board is wrapped into a tubular form. The heat-conductive strip 3 is guided onto top of the thermal cable 5.

The apparatus further comprises nozzles 10 for heating the edges of the heat-conductive strip 3 and/or the insulation 2 at the point to which the heat-conductive strip 3 should attach. The nozzles 10 are shaped so as to allow them to direct thermal effect at the desired point very accurately. The apparatus may also comprise a protective plate 11, which protects the thermal cable 5 against extensive heating of the cable. The protective plate 11 may be, for example, a metal plate which prevents extensive heating of the thermal cable 5. The heated heat-conductive strip 3 and the insulation 2 are pressed against each other by means of a rotating roll 12. The roll 12 is made of polytetrafluoroethylene PTFE, for instance. The roll 12 is shaped to press the edges of the heat-conductive strip 3 against the insulation 2 but the roll 12 is also provided with a groove so as to prevent the roll 12 from pressing the middle section of the heat-conductive strip 3 against the insulation 2. Thanks to this structure and the thermal cable 5, an assembly space 4 which the thermal cable 5 occupies is formed between the heat-conductive strip 3 and the insulation 2. The middle section of the heat-conductive strip 3 is not heated, either, in which case the thermal cable 5 remains covered by the unheated section of the strip in the middle of the strip 3, thus forming a free assembly space 4 between the insulation 2 and the strip 3. Instead of the roll 12 provided with a groove, it is feasible to use two separate rolls. In that case each roll presses different sides or edges of the strip 3 against the insulation 2.

When the heat-conductive strip 3 is made of aluminium foil coated with polyethylene PE or other plastic material, the strip 3 is attached to the insulation 2 most preferably by blowing hot air through the nozzles 10. If the heat-conductive strip 3 is made of uncoated aluminium foil, a flame can be directed at the attachment point by the nozzles 10, in which case the attachment occurs by flame lamination. Another feasible attachment method is to laminate the aluminium foil to the insulation by means of a heated plate like a soldering hammer or another similar piece.

The apparatus further includes a wrapping device 13 for wrapping prefabricated, board-shaped insulation 2 into a tubular form. The sides of the board-shaped insulation 2 are joined by a welding device 14. A joint formed between the sides of the board-shaped insulation 2 which are against each other is fused with hot air, for example, so as to provide the insulation 2 with a tubular form. Instead of utilizing hot air, the welding device 14 may fuse the joint by another method known per se. Instead of the welding device 14, the sides of the board-shaped insulation can be joined by a gluing device, for example.

The insulation wrapped into a tubular form is guided through a nozzle 16 of an extruder 15. The extruder 15 and the nozzle 16 extrude a plastic layer outside the insulation 2. A corrugated outer sheath 6 is formed from the plastic layer in a corrugator 17. The corrugator 17 is provided with two moving chill moulds 18 in a manner known per se. The structure and function of the extruder 15, nozzle 16 and corrugator 17 are not described more closely here since they are completely known to a person skilled in the art.

For the sake of clarity, Figure 2 does not show guiding devices or support structures that are needed to feed the insulation 2, thermal cable 5 and heat-conductive strip 3.

The thermal cable 5 can be fed continuously from the reel 8, in which case the arrangement for keeping a pipe unfrozen, inside of which there is a thermal cable 5, is produced continuously. The thermal cable 5 may also be fixed so that an assembly space 4 is formed when the heat-conductive strip 3 is pressed against the insulation 2 but when the strip 3 and the insulation 2 move forward in the apparatus, no cable is fed into the assembly space 4 but it remains empty. Instead of the thermal cable 5, the assembly space 4 can naturally be formed by another band-shaped or rod-shaped object or by means with another appropriate shape. Furthermore, in the solution of Figure 2, a pipe is not fed inside the arrangement for keeping a pipe unfrozen but an arrangement is formed which is slipped around the pipe after the manufacture. It is also feasible to manufacture a product where one or more pipes are continuously fed inside the insulation 2 during the manufacture.

If the arrangement for keeping a pipe unfrozen has been provided with an empty assembly space 4, the thermal cable 5 can be afterwards slipped inside the arrangement for keeping a pipe unfrozen which has been cut to size, for instance. The arrangement for keeping a pipe unfrozen can even be installed first, and a thermal cable 5 is added later, if necessary.

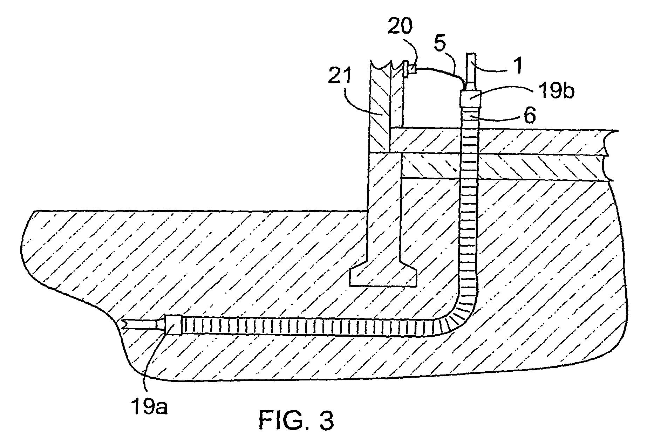

Figure 3 illustrates an arrangement for keeping a pipe unfrozen installed in a water pipe 1 entering a building 21. The water pipe 1 is placed deep enough below the ground surface, i.e. below the frost limit, in which case the water pipe 1 does not in practice need to be insulated at all. At points where the water pipe 1 enters the building 21, it has to be installed closer to the ground surface, and thus there is a risk that the pipe 1 will freeze at the points where it enters the building. Freezing can be prevented by the solution shown in Figure 3. The installation starts by first installing the pipe 1 cut to size. After this, the first end cover 19a is slipped from the end of the pipe 1. Then the rest of the arrangement for keeping a pipe unfrozen is slipped around the pipe 1, and the second end cover 19b is installed last. The end covers 19a and 19b are sealed to the ends of the arrangement for keeping a pipe unfrozen on top of the outer sheath 6. The structure, material and installation of the end covers is not discussed in greater detail here because these issues are familiar to a person skilled in the art. Thanks to the end covers 19a and 19b and the outer sheath 6, the arrangement for keeping a pipe unfrozen can be made watertight. A connector is arranged at an end of the thermal cable 5. At its simplest, the connector 20 is a plug which can be directly plugged into a socket of a 230 V electric network in the building 21.

It is obvious to a person skilled in the art that as technology advances, the inventive concept can be implemented in various ways. The invention and its embodiments are thus not restricted to the examples described above. Thus the insulation 2 does not need to be prefabricated in a board shape but it may be prefabricated in a tubular form. Furthermore, the arrangement for keeping a pipe unfrozen may be provided with a split in the longitudinal direction by means of which the arrangement can be installed around the pipe 1 in the horizontal direction. In that case it is unnecessary to slip the arrangement for keeping a pipe unfrozen around the pipe from its one end in the longitudinal direction. In addition, the arrangement for keeping a pipe unfrozen may be arranged either around one pipe 1 as shown in Figure 1 or around more than one pipe. Furthermore, the length of the arrangement for keeping a pipe unfrozen may be tens or hundreds of metres, in which case it is stored on a reel and cut as required. On the other hand, it is feasible to manufacture units which are cut to size, e.g. a length of few metres, and which include a suitably sized thermal cable 5 and all necessary equipment, such as end covers and installation means.

## Claims

1. An arrangement for keeping a pipe (1) unfrozen which comprises an insulation layer (2) provided with a heat-conductive strip (3), **characterized in that** the heat-conductive strip (3) is attached to the inner surface of the insulation layer (2) in such a way that there is an assembly space (4) between the heat-conductive strip (3) and the insulation layer (2).

2. An arrangement for keeping a pipe unfrozen according to claim 1, **characterized in that** there is a thermal cable (5) in the assembly space (4) between the heat-conductive strip (3) and the insulation layer.

3. An arrangement for keeping a pipe unfrozen according to claim 1 or 2, **characterized in that** the heat-conductive strip (3) contains aluminium.

4. An arrangement for keeping a pipe unfrozen according to claim 3, **characterized in that** aluminium is coated with polyethylene.

5. An arrangement for keeping a pipe unfrozen according to any one of the preceding claims, **characterized in that** the heat-conductive strip (3) is attached to the inner surface of the insulation layer by heat.

6. An arrangement for keeping a pipe unfrozen according to any one of the preceding claims, **characterized in that** there is an outer sheath (6) outside the insulation layer.

7. An arrangement for keeping a pipe unfrozen according to claim 6, **characterized in that** the outer sheath is made of polyethylene.

8. An arrangement for keeping a pipe unfrozen according to claim 6 or 7, **characterized in that** the outer sheath (6) is corrugated.

9. A method of manufacturing an arrangement for keeping a pipe (1) unfrozen, the method comprising guiding insulation (2) and a heat-conductive strip (3) into each other, **characterized by** attaching the edges of the heat-conductive strip (3) to the inner surface of the insulation (2) in such a way that an assembly space (4) is formed between the heat-conductive strip (3) and the insulation (2).

10. A method according to claim 9, **characterized in that** a thermal cable (5) is guided to the inner surface of the insulation (2), and the heat-conductive strip (3) is guided onto top of the thermal cable, in which case the thermal cable (5) occupies the assembly space (4).

11. A method according to claim 9 or 10, **characterized in that** the heat conductive strip (3) is attached to the insulation (2) by heat.

12. A method according to claim 11, **characterized in that** hot air blow is utilized in the attachment of the heat-conductive strip (3) to the insulation (2).

13. A method according to claim 11, **characterized in that** flame lamination is utilized in the attachment of the heat-conductive strip (3) to the insulation (2).

14. A method according to any one of claims 9 to 13, **characterized in that** an outer sheath (6) is formed outside the insulation (2).

15. An apparatus for manufacturing an arrangement for keeping a pipe (1) unfrozen, the apparatus including means for feeding insulation (2) and means for feeding a heat-conductive strip (3) inside the insulation (2), **characterized in that** the apparatus includes means for attaching the edges of the heat-conductive strip (3) to the inner surface of the insulation (2) in such a way that an assembly space (4) is formed between the heat-conductive strip (3) and the insulation (2).

16. An apparatus according to claim 15, **characterized in that** the apparatus includes nozzles (10) for heating the edges of the heat-conductive strip (3) and/or the insulation (2) and a roll (12) for pressing the edges of the heat-conductive strip against the insulation (2).

17. An apparatus according to claim 15 or 16, **characterized in that** the apparatus includes means for forming an assembly space (4) between the insulation (2) and the heat-conductive strip (3).

18. An apparatus according to claim 17, **characterized in that** the apparatus includes means for feeding a thermal cable (5) between the heat-conductive strip (3) and the insulation (2).

19. An apparatus according to claim 18, **characterized in that** the apparatus includes a protective plate (11) for protecting the thermal cable (5).

20. An apparatus according to any one of claims 15 to 19, **characterized in that** the apparatus includes an extruder (15) provided with a nozzle (16) for forming an outer sheath (6) outside the insulation.

21. An apparatus according to claim 20, **characterized in that** the apparatus includes a corrugator (17) for forming a corrugated outer sheath (6).

## Patentansprüche

1. Anordnung zum Verhindern des Einfrierens eines Rohrs (1), mit einer mit einem wärmeleitenden Streifen (3) versehenen Isolierschicht (2),
**dadurch gekennzeichnet, dass**
der wärmeleitende Streifen (3) derart mit der Innenfläche der Isolierschicht (2) verbunden ist, dass ein Einbauraum (4) zwischen dem wärmeleitenden Streifen (3) und der Isolierschicht (2) vorhanden ist.

2. Anordnung zum Verhindern des Einfrierens eines Rohrs nach Anspruch 1, **dadurch gekennzeichnet, dass** ein Thermokabel (5) in dem Einbauraum (4) zwischen dem wärmeleitenden Streifen (3) und der Isolierschicht vorgesehen ist.

3. Anordnung zum Verhindern des Einfrierens eines Rohrs nach Anspruch 1 oder 2, **dadurch gekennzeichnet, dass** der wärmeleitende Streifen (3) Aluminium aufweist.

4. Anordnung zum Verhindern des Einfrierens eines Rohrs nach Anspruch 3, **dadurch gekennzeichnet, dass** das Aluminium mit Polyethylen beschichtet ist.

5. Anordnung zum Verhindern des Einfrierens eines Rohrs nach einem der vorhergehenden Ansprüche, **dadurch gekennzeichnet, dass** der wärmeleitende Streifen (3) durch Wärme mit der Innenfläche der Isolierschicht verbunden ist.

6. Anordnung zum Verhindern des Einfrierens eines Rohrs nach einem der vorhergehenden Ansprüche, **dadurch gekennzeichnet, dass** ein Außenmantel (6) außerhalb der Isolierschicht vorgesehen ist.

7. Anordnung zum Verhindern des Einfrierens eines Rohrs nach Anspruch 6, **dadurch gekennzeichnet, dass** der Außenmantel aus Polyethylen gefertigt ist.

8. Anordnung zum Verhindern des Einfrierens eines Rohrs nach Anspruch 6 oder 7, **dadurch gekennzeichnet, dass** der Außenmantel (6) gewellt ist.

9. Verfahren zum Verhindern des Einfrierens eines Rohrs (1), mit dem Schritt des Führens einer Isolierung (2) und eines wärmeleitenden Streifens (3) ineinander,
**gekennzeichnet durch**
das Verbinden der Ränder des wärmeleitenden Streifens (3) mit der Innenfläche der Isolierung (2) derart, dass ein Einbauraum (4) zwischen dem wärmeleitenden Streifen (3) und der Isolierung (2) gebildet wird.

10. Verfahren nach Anspruch 9, **dadurch gekennzeichnet, dass** ein Thermokabel (5) zu der Innenfläche der Isolierung (2) geführt wird und der wärmeleitende Streifen (3) zu dem oberen Teil des Thermokabels geführt wird, wodurch das Thermokabel (5) den Einbauraum (4) einnimmt.

11. Verfahren nach Anspruch 9 oder 10, **dadurch gekennzeichnet, dass** der wärmeleitende Streifen (3) durch Wärme mit der Isolierung (2) verbunden ist.

12. Verfahren nach Anspruch 11, **dadurch gekennzeichnet, dass** eine Heißluftanblasung beim Verbinden des wärmeleitenden Streifens (3) mit der Isolierung (2) angewendet wird.

13. Verfahren nach Anspruch 11, **dadurch gekennzeichnet**, das eine Flammlaminierung beim Verbinden des wärmeleitenden Streifens (3) mit der Isolierung (2) angewendet wird.

14. Verfahren nach einem der Ansprüche 9 bis 13, **dadurch gekennzeichnet, dass** ein Außenmantel (6) außerhalb der Isolierung (2) ausgebildet wird.

15. Vorrichtung zum Herstellen einer Anordnung zum Verhindern des Einfrierens eines Rohrs (1), mit einer Einrichtung zum Einführen der Isolierung (2) und einer Einrichtung zum Einführen des wärmeleitenden Streifens (3) innerhalb der Isolierung (2),
**dadurch gekennzeichnet, dass**
die Vorrichtung eine Einrichtung zum Verbinden der Ränder des wärmeleitenden Streifens (3) mit der Innenfläche der Isolierung (2) derart aufweist, dass ein Einbauraum (4) zwischen dem wärmeleitenden Streifen (3) und der Isolierung (2) gebildet wird.

16. Vorrichtung nach Anspruch 15, **dadurch gekennzeichnet, dass** die Vorrichtung Düsen (10) zum Erwärmen der Ränder des wärmeleitenden Streifens (3) und/oder der Isolierung (2) und eine Walze (12) zum Drücken der Ränder des wärmeleitenden Streifens gegen die Isolierung (2) aufweist.

17. Vorrichtung nach Anspruch 15 oder 16, **dadurch gekennzeichnet, dass** die Vorrichtung eine Einrichtung zum Ausbilden eines Einbauraums (4) zwischen der Isolierung (2) und dem wärmeleitenden Streifen (3) aufweist.

18. Vorrichtung nach Anspruch 17, **dadurch gekennzeichnet, dass** die Vorrichtung eine Einrichtung zum Einführen eines Thermokabels (5) zwischen den wärmeleitenden Streifen (3) und die Isolierung (2) aufweist.

19. Vorrichtung nach Anspruch 18, **dadurch gekennzeichnet, dass** die Vorrichtung eine Schutzplatte (11) zum Schützen des Thermokabels (5) aufweist.

20. Vorrichtung nach einem der Ansprüche 15 bis 19, **dadurch gekennzeichnet, dass** die Vorrichtung einen Extruder (15) mit einer Düse (16) zum Ausbilden eines Außenmantels (6) außerhalb der Isolierung aufweist.

21. Vorrichtung nach Anspruch 20, **dadurch gekennzeichnet, dass** die Vorrichtung einen Korrugator (17) zum Ausbilden eines gewellten Außenmantels (6) aufweist.

## Revendications

1. Agencement permettant d'empêcher un tuyau (1) de geler qui comprend une couche d'isolation (2) pourvue d'une bande thermo-conductrice (3), **caractérisé en ce que** la bande thermo-conductrice (3) est fixée à la surface intérieure de la couche d'isolation (2) de manière telle qu'il y a un espace d'assemblage (4) entre la bande thermo-conductrice (3) et la couche d'isolation (2).

2. Agencement permettant d'empêcher un tuyau de geler selon la revendication 1, **caractérisé en ce qu'**il y a un câble thermique (5) dans l'espace d'assemblage (4) entre la bande thermo-conductrice (3) et la couche d'isolation.

3. Agencement permettant d'empêcher un tuyau de geler selon la revendication 1 ou 2, **caractérisé en ce que** la bande thermo-conductrice (3) contient de l'aluminium.

4. Agencement permettant d'empêcher un tuyau de geler selon la revendication 3, **caractérisé en ce que** l'aluminium est enduit de polyéthylène.

5. Agencement permettant d'empêcher un tuyau de geler selon l'une quelconque des revendications précédentes, **caractérisé en ce que** la bande thermo-conductrice (3) est thermofixée à la surface intérieure de la couche d'isolation.

6. Agencement permettant d'empêcher un tuyau de geler selon l'une quelconque des revendications précédentes, **caractérisé en ce qu'**il y a une gaine extérieure (6) à l'extérieur de la couche d'isolation.

7. Agencement permettant d'empêcher un tuyau de geler selon la revendication 6, **caractérisé en ce que** la gaine extérieure est faite de polyéthylène.

8. Agencement permettant d'empêcher un tuyau de geler selon la revendication 6 ou 7, **caractérisé en ce que** la gaine extérieure (6) est ondulée.

9. Procédé de fabrication d'un agencement permettant d'empêcher un tuyau (1) de geler, le procédé comprenant le guidage d'une isolation (2) et une bande thermo-conductrice (3) l'une dans l'autre, **caractérisé par** la fixation des bords de la bande thermo-conductrice (3) à la surface intérieure de l'isolation (2) de manière telle qu'un espace d'assemblage (4) est formé entre la bande thermo-conductrice (3) et l'isolation (2).

10. Procédé selon la revendication 9, **caractérisé en ce qu'**un câble thermique (5) est guidé jusqu'à la surface intérieure de l'isolation (2), et la bande thermo-conductrice (3) est guidée par-dessus le câble thermique, auquel cas le câble thermique (5) occupe l'espace d'assemblage (4).

11. Procédé selon la revendication 9 ou 10, **caractérisé en ce que** la bande thermo-conductrice (3) est thermofixée à l'isolation (2).

12. Procédé selon la revendication 11, **caractérisé en ce qu'**un soufflage d'air chaud est utilisé dans la fixation de la bande thermo-conductrice (3) à l'isolation (2).

13. Procédé selon la revendication 11, **caractérisé en ce qu'**une stratification à la flamme est utilisée dans la fixation de la bande thermo-conductrice (3) à l'isolation (2).

14. Procédé selon l'une quelconque des revendications 9 à 13, **caractérisé en ce qu'**une gaine extérieure (6) est formée à l'extérieur de l'isolation (2).

15. Appareil pour fabriquer un agencement permettant d'empêcher un tuyau (1) de geler, l'appareil comprenant des moyens pour fournir isolation (2) et des moyens pour fournir une bande thermo-conductrice (3) à l'intérieur de l'isolation (2), **caractérisé en ce que** l'appareil comprend des moyens pour fixer les bords de la bande thermo-conductrice (3) à la surface intérieure de l'isolation (2) de manière telle qu'un espace d'assemblage (4) est formé entre la bande thermo-conductrice (3) et l'isolation (2).

16. Appareil selon la revendication 15, **caractérisé en ce que** l'appareil comprend des buses (10) pour chauffer les bords de la bande thermo-conductrice (3) et/ou l'isolation (2) et un rouleau (12) pour comprimer les bords de la bande thermo-conductrice contre l'isolation (2).

17. Appareil selon la revendication 15 ou 16, **caractérisé en ce que** l'appareil comprend des moyens pour former un espace d'assemblage (4) entre l'isolation (2) et la bande thermo-conductrice (3).

18. Appareil selon la revendication 17, **caractérisé en ce que** l'appareil comprend des moyens pour fournir un câble thermique (5) entre la bande thermo-conductrice (3) et l'isolation (2).

19. Appareil selon la revendication 18, **caractérisé en ce que** l'appareil comprend une plaque de protection (11) pour protéger le câble thermique (5).

20. Appareil selon l'une quelconque des revendications 15 à 19, **caractérisé en ce que** l'appareil comprend une extrudeuse (15) pourvue d'une buse (16) pour former une gaine extérieure (6) à l'extérieur de l'isolation.

21. Appareil selon la revendication 20, **caractérisé en ce que** l'appareil comprend une onduleuse (17) pour former une gaine extérieure ondulée (6).
